# EUROPÄISCHE PATENTANMELDUNG

(11) **EP 4 744 738 A1**
(43) Veröffentlichungstag der Anmeldung: **20.05.2026**
(21) Anmeldenummer: 25214595.8
(22) Anmeldetag: 10.11.2025
(51) Int. Cl.: A62C 2/06, A62C 2/24, F24F 11/35, F24F 13/14

(54) **TEMPERATUR-AUSLÖSER FÜR EINE LUFTKANAL-VERSCHLUSSEINRICHTUNG**

(30) Priorität: 13.11.2024 DE 102024133171
(71) Anmelder: Schako KG, 78600 Kolbingen (DE)
(72) Erfinder: Müller, Dr. Rainer, 78600 Kolbingen (DE)
(74) Vertreter: Patentanwälte und Rechtsanwalt Weiß, Arat & Partner mbB

(57) **Zusammenfassung**

Die Erfindung betrifft einen Temperatur-Auslöser (1) für eine Luftkanal-Verschlusseinrichtung (20) mit einem Betätigungs-Stössel (2), wobei der Betätigungs-Stössel (2) in einer Ruhelage in einer Innenhülse (3) angeordnet ist, wobei der Betätigungs-Stössel (2) in Ruhelage feder-vorgespannt ist, wobei die Innenhülse (3) ein Röhrenzylinder ist, wobei der Betätigungs-Stössel (2) in Ruhelage den Anschlag (7) ausbildet, wobei die Innenhülse (3) in einer Aussenhülse (8) angeordnet ist, wobei die Aussenhülse (8) einends in einen Kupplungskorb (9) mündet und andernends geöffnet ist, wobei der Betätigungs-Stössel (2) andernends des Anschlags (7) eine erste Kupplung (10) aufweist, wobei ein Schmelzlot (4) zwischen der Innenhülse (3) und der Aussenhülse (6) angeordnet ist.

## Beschreibung

### Technisches Gebiet

Die Erfindung betrifft einen Temperatur-Auslöser für eine Luftkanal-Verschlusseinrichtung nach dem Oberbegriff des Anspruchs 1.

### Stand der Technik

Derartige Temperatur-Auslöser sind in vielfältiger Form und Ausführung bekannt und auf dem Markt.

Die DE 10 2020 208 843 A1 offenbart beispielsweise eine Ventilfassung für einen druckbeaufschlagten Behälter, wie beispielsweise ein Gastank, Speichertank, eine Druckflasche oder ein Flüssiggastank. Dabei wird eine Öffnung des Behälters mittels eines Schmelzringelements gesichert, welches oberhalb einer vorbestimmten Schmelztemperatur schmelzbar ist, wobei aus den druckbeaufschlagten Behälter eine Kraftwirkung auf ein Filterelement in Richtung des Schmelzringelements erzeugbar ist und bei intaktem Schmelzringelement ein Medium aus dem Behälter durch das Filterelement und aus der Ventilbohrung herausleitbar ist und bei geschmolzenem Schmelzringelement das Filterelement durch die Kraftwirkung auf die Dichtfläche aufdrückbar ist und ein Austreten des Mediums durch das Filterelement und somit aus der Ventilbohrung verhindert wird.

Eine ähnliche Konstruktion beschreibt die US 2,194,541 A, bei der eine Ventilkonstruktion und insbesondere ein Sicherheitsventilmechanismus offenbart ist, die insbesondere zur Verwendung in Verbindung mit Tanks, Flaschen und anderen Behältern für Gas dient und dabei ein federgespannte Vorrichtung zeigt, die mittels eines Schmelzlots bei Hitze auslöst, der Federkraft nachgibt und das Ventil ggf. verschliesst.

Weiter wird auf die GB 2 417 425 A hingewiesen, die ein Sauerstoffverabreichungsgerät offenbart, das eine Sauerstoffquelle und eine flexible Sauerstoffleitung aufweist, wobei die flexible Sauerstoffleitung ein Sicherheitsventil in Form eines federbeaufschlagten Schmelzsicherungsanschlags aufweist, der das Schliessen des Ventils verhindert. Im Falle eines Brandes schmilzt der Schmelzsicherungsanschlag, wodurch die Feder das Sicherheitsventil schliesst und die Zufuhr von Sauerstoff zum Feuer dadurch unterbricht.

Auch wird auf die DE 73 28 137 U hingewiesen, die eine schwenkbar in einer Belüftungsanlage gelagerte Feuerschutzklappe offenbart, deren Mechanismus eine als Schmelzlotsicherung oder als bei Hitze zerspringende Glaspatrone ausgebildete Thermosicherung aufweist, die im Falle eines Feuers die Feuerschutzklappe betätigt und den Belüftungskanal der Belüftungsanlage verschliesst.

Zusätzlich wird auf die JP 2009-294097 A verwiesen, die eine ähnliche Schmelzlotsicherung für einen Gaszähler offenbart.

Weiter wird auf die US 5,791,367 A hingewiesen, die eine Druckentlastungsvorrichtung offenbart, die normalerweise geschlossen ist und sich unter bestimmten Konstruktionsparametern in einen offenen Zustand bewegt, die erfordern, dass Fluid von einer Kammer mit relativ hohem Druck innerhalb eines Behälters zu einer Atmosphäre mit relativ niedrigem Druck, die die Druckentlastungsvorrichtung umgibt, fliesst. Ein Stopfengehäuse hat eine Durchgangsbohrung, die eine Verbindung zwischen der Kammer innerhalb des Behälters und der Aussenatmosphäre herstellt. In der Durchgangsbohrung befindet sich ein Stopfen. Eine schmelzbare Legierung füllt zumindest teilweise einen Hohlraum oder einen Durchgang, der vorzugsweise zwischen dem Stopfen und dem Stopfengehäuse gebildet wird. In einem Störfall, z. B. bei einem Brand von aussen, steigt die Temperatur der Schmelzlegierung an, wodurch diese erweicht oder schmilzt. Dadurch wiederum wird der Stopfen freigegeben.

Auf dem Gebiet der Lüftungs- und Klimatechnik werden solche Vorrichtungen vor allem zur Feuer- bzw. Rauchabschottung benötigt. Beispielsweise werden sie im Zusammenspiel mit Brandschutzklappen oder auch Tellerventilen eingesetzt, um im Brandfall entsprechende Öffnungen zu einem Raum hin zu verschliessen, damit ein Feuer nicht auf diesen Raum übergreifen kann bzw. dieser Raum weitestgehend nicht mit Rauch geflutet wird.

Eine derartige Sicherung ist beispielsweise aus der DE 199 11 246 B4 bekannt. Dabei handelt es sich um eine Feuerschutz-Absperrvorrichtung für Lüftungskanäle, bestehend aus einem Einbaugehäuse mit einem darin angeordneten Ventilsitz und einem unter Federbeaufschlagung in Offenstellung gehaltenen Ventilschliesskörper, der bei vorgegebener Temperatur in Schliessstellung schnellt, wobei der Ventilschliesskörper eine von einer Schliessfeder umgebene Ventilstange aufweist, wobei der Ventilstange eine Arretierungsvorrichtung zugeordnet ist, welche die Ventilstange und über die Ventilstange den in Schliessstellung befindlichen Ventilschliesskörper arretiert, wobei die Ventilstange in einer den Einbaugehäusequerschnitt überbrückenden Halterung geführt ist, und wobei die Halterung als Arretierungsvorrichtung einen Hohlkegel für den Eingriff eines auf der Ventilstange angeordneten Arretierungskegels aufweist.

Des Weiteren ist aus der EP 1 762 276 A2 eine Auslöseeinrichtung zum Auslösen zumindest eines eine Leitung eines lufttechnischen Systems verschliessenden Absperrelementes und/oder freigebenden Entrauchungselementes bekannt. Auch hier wird ein thermisch entriegelbares Halteorgan gezeigt, das mit einer Antriebseinrichtung für das Absperrungselement in das Absperrelement im normalen Betriebsfall in offener Stellung haltender bzw. das Entrauchungselement in geschlossener Stellung haltender Wirkverbindung steht, wobei das Halteorgan eine stiftartige, gekapselte Bauform aufweist und in das Innere der Leitung vorsteht. Das Halteorgan ist als Hohlprofil ausgebildet, auf dessen in der Leitung befindliches freies Ende eine Kappe aufgesetzt ist. Diese Kappe ist aus dünnwandigen Materialien ausgebildet, ebenso ist das Hohlprofil aus dünnwandigen Materialien gebildet. Hierdurch soll bei einer strömungsgünstigen Anordnungsmöglichkeit im Inneren der Leitung eine zuverlässige Auslösung des Absperrungselementes gewährleistet sein. Allerdings hat diese Ausgestaltung den Nachteil, dass durch die Dünnwandigkeit des Hohlprofils die gesamte Anordnung sehr instabil ist.

Aus der DE 10 2019 132 152 A1 ist eine Vorrichtung zum Auslösen eines Betätigungselementes bekannt, welches von einer Sicherung in einer Haltelage gehalten ist, wobei zwischen der Sicherung und dem Betätigungselement ein Befestigungsmittel vorgesehen ist, welches auf eine Temperaturänderung reagiert und das Betätigungselement in eine Arbeitslage entlässt. Hierfür ist dem Betätigungselement ein Einsatz zugeordnet, der bei der Temperaturänderung einem Druck des Betätigungselementes nachgibt.

### Aufgabe der Erfindung

Die Aufgabe der vorliegenden Erfindung ist es, die Nachteile aus dem Stand der Technik zu überwinden. Insbesondere soll eine Vorrichtung der o.g. Art bereitgestellt werden, die sehr schnell auf eine Temperaturänderung reagiert und sehr einfach aufgebaut ist. Ferner soll insbesondere die Wartung von Brandschutzeinrichtungen erleichtert und vergünstigt werden.

### Lösung der Aufgabe

Zur Lösung der Aufgabe führen die Merkmale nach dem Anspruch 1.

Der erfindungsgemässe Temperatur-Auslöser ist für eine Luftkanal-Verschlusseinrichtung vorgesehen. Dabei steht die Luftkanal-Verschlusseinrichtung wiederum in Wirkverbindung zu beispielsweise einer Brandschutzklappe innerhalb eines Lüftungskanals.

Dabei ist ein Betätigungs-Stössel vorgesehen, wobei der Betätigungs-Stössel in einer Ruhelage in einer Innenhülse angeordnet ist. Ruhelage bedeutet in diesem Zusammenhang, dass der Temperatur-Auslöser nicht aktiviert wurde, sondern für eine Aktivierung bereitsteht. Die Arbeitslage wird im Rahmen der Erfindung derart definiert, dass der Temperatur-Auslöser durch beispielsweise aufkommende Hitze im Lüftungskanal aktiviert wurde und im Nachgang über die Luftkanal-Verschlusseinrichtung die Brandschutzklappe den Lüftungskanal verschliesst.

Dazu ist der Betätigungs-Stössel in Ruhelage durch eine Feder vorgespannt.

Erfindungsgemäss besteht die Innenhülse aus einem Röhrenzylinderwelcher einen Anschlag ausbildet. Der Anschlag liegt an einem umgehenden Rand auf die Innenhülse auf. Dadurch wird bei Entspannung der Feder ein Verkanten verhindert, wobei der Anschlag bei Aktivierung unmittelbar zusätzlich direkten Druck auf die Innenhülse ausüben kann und keine Zeit verloren wird.

Die Innenhülse wiederum ist in einer Aussenhülse angeordnet, wobei die Aussenhülse einends in einen Kupplungskorb mündet und andernends geöffnet ist. Dabei ist ein Schmelzlot zwischen der Innenhülse und der Aussenhülse angeordnet. Das Schmelzlot ist in einem festen Aggregatzustand und fügt in Ruhelage die Aussenhülse an die Innenhülse. Beim Erreichen einer definierten Temperatur verändert das Schmelzlot seinen Aggregatzustand zu flüssig und die Fügung der Innenhülse an die Aussenhülse wird aufgehoben. Dadurch kann die Innenhülse beispielsweise aus der Aussenhülse hinausgleiten.

Die Aussenhülse mit der Innenhülse und ggf. auch dem Betätigungs-Stössel können bei Erreichen eines Wartungsintervalls auf einfache Weise ausgetauscht werden. Dazu muss die Person den Kupplungskorb von einer Kegelhülse der Luftkanal-Verschlusseinrichtung lösen. Dann kann der Nutzer entweder den gesamten Temperatur-Auslöser austauschen oder den Kupplungskorb wiederverwenden und nur die Aussenhülse und die Innenhülse austauschen oder die Aussenhülse, die Innenhülse und den Betätigungs-Stössel austauschen. Hier kommen die üblichen form- und kraftschlüssigen Verbindungsformen in Betracht.

Der Betätigungs-Stössel weist einends eine erste Kupplung auf. Die erste Kupplung ist dabei mit einem Auslösebolzen lösbar verbunden. So kann die nutzende Person auch bei Bedarf den Betätigungs-Stössel ebenfalls austauschen, indem der Betätigungs-Stössel an der ersten Kupplung von dem Auslösebolzen lösbar und ggf. wiederverbindbar ausgeführt ist. Hier kommen die üblichen form- und kraftschlüssigen Verbindungsformen in Betracht.

In einem bevorzugten Ausführungsbeispiel liegt der Anschlag auf der Innenhülse in Ruhelage an. Dies wiederum verringert die Reaktionszeiten und erleichtert die Auslegung der Federkraft zur Vorspannung.

Die Innenhülse ist andererseits des Betätigungs-Stössels plan abschliessend mit der geöffneten Aussenhülse angeordnet. Plan bedeutet in dem Zusammenhang, dass weder die Innenhülse aus der Aussenhülse wesentlich herausragt, noch wesentlich hineingezogen ist. Die plane Auslegung verhindert, dass es in dem Lüftungskanal zu ungewollten Pfeifgeräuschen kommen kann.

Die Aussenhülse weist einends einen Ausstülpungsring auf, wobei der Ausstülpungsring in Ruhelage auf einem Einstülpungsring des Kupplungskorbs aufliegt. Dadurch wird die Auswechselbarkeit des Temperatur-Auslösers zusätzlich vereinfacht, wenn beispielsweise die nutzende Person am Ende des Wartungsintervalls den Kupplungskorb weiterverwenden will.

Der Kupplungskorb weist hierfür eine Befestigungseinrichtung auf. Dabei kann es sich beispielsweise um einen Gewindeverbindung handeln. Wichtig ist in diesem Zusammenhang, dass der Kupplungskorb ggf. wiederverwendbar mehrmals gelöst und wieder verbunden werden kann. Eine Gewindeverbindung ist nicht zwingend notwendig, sondern nur ein Ausführungsbeispiel.

Die Luftkanal-Verschlusseinrichtung dient der Wirkverbindung für eine Brandschutzklappe. Dazu weist die Luftkanal-Verschlusseinrichtung einen Auslösemechanismus auf. Der Auslösemechanismus ist dazu in einem Gehäuse angeordnet, wobei der Auslösemechanismus einen Auslösebolzen aufweist, wobei der Auslösebolzen eine Feder umfasst, die in Ruhelage den Auslösebolzen vorspannt. Dabei weist der Auslösebolzen einends einen Auslöseknopf auf und andernends in einem Bereich einer Führung den Temperatur-Auslöser, wie er oben beschrieben ist.

Die erste Kupplung des Temperatur-Auslöser ist austauschbar mit einer ersten Kupplungsaufnahme des Betätigers verbindbar. Das bedeutet, dass die erste Kupplung von der ersten Kupplungsaufnahme getrennt ausgetauscht oder wieder verbunden werden kann.

Die Führung ist einends von dem Gehäuse umfasst und andernends weist die Führung eine zweite Kupplungsaufnahme auf, wobei die zweite Kupplungsaufnahme austauschbar mit dem Kupplungskorb des Temperatur-Auslösers verbindbar ist. Das bedeutet, dass die zweite Kupplung von dem Kupplungskorb getrennt ausgetauscht oder wieder verbunden werden kann.

Die Führung bildet eine sich von dem Gehäuse weg verjüngende Kegelhülse aus, in welcher der Auslösebolzen beweglich angeordnet ist.

Ein derartiger Temperatur-Auslöser ist sehr einfach aufgebaut und besteht nur aus der Innenhülse und der Aussenhülse sowie dem dazwischen angeordneten Schmelzlot. Er hat aber den wesentlichen Vorteil, dass eine Änderung der Temperatur um die erfindungsgemässe Vorrichtung herum sofort von der Aussenhülse aufgenommen und auf das Schmelzlot übertragen werden kann. Dazu ist die Innenhülse und auch die Aussenhülse aus einem dünnwandigen, gut eine Temperatur leitenden Material hergestellt. Dabei kann es sich um einen metallenen Werkstoff oder einen anderen diese Eigenschaften aufweisenden Werkstoff handeln.

Sobald das Schmelzlot beispielsweise einen definierten Schmelzpunkt erreicht hat, bei dem ein Widerstand gegen das unter Spannung stehende Betätigungselement überwunden ist, löst der Temperatur-Auslöser aus und der Betätigungs-Stössel schiebt die Innenhülse aus der Aussenhülse bzw. verschiebt die Innenhülse in der Aussenhülse zumindest so weit, bis eine entsprechende Auslösemechanik durch den Betätigungs-Stössel ausgelöst wird.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Figur 1: eine perspektivische Ansicht von schräg oben auf einen erfindungsgemässen Temperatur-Auslöser;
- Figur 2: eine perspektivische Ansicht von schräg unten auf den Temperatur-Auslöser nach Figur 1;
- Figur 3: eine perspektivische Ansicht von schräg unten auf eine Aussenhülse;
- Figur 4: eine Draufsicht auf die Aussenhülse nach Figur 3;
- Figur 5: eine geschnittene Ansicht des erfindungsgemässen Temperatur-Auslösers entlang einer Schnittlinie in Figur 4;
- Figur 6: eine vergrösserte Ansicht eines Teils des Temperatur-Auslösers nach Figur 5;
- Figur 7: eine vergrösserte Schnittansicht des Ausschnitts 17 in Figur 8;
- Figur 8: eine Seitenansicht einer Luftkanal-Verschlusseinrichtung;
- Figur 9: eine vergrösserte Schnittansicht des Ausschnitts 16 in Figur 8.

### Ausführungsbeispiel

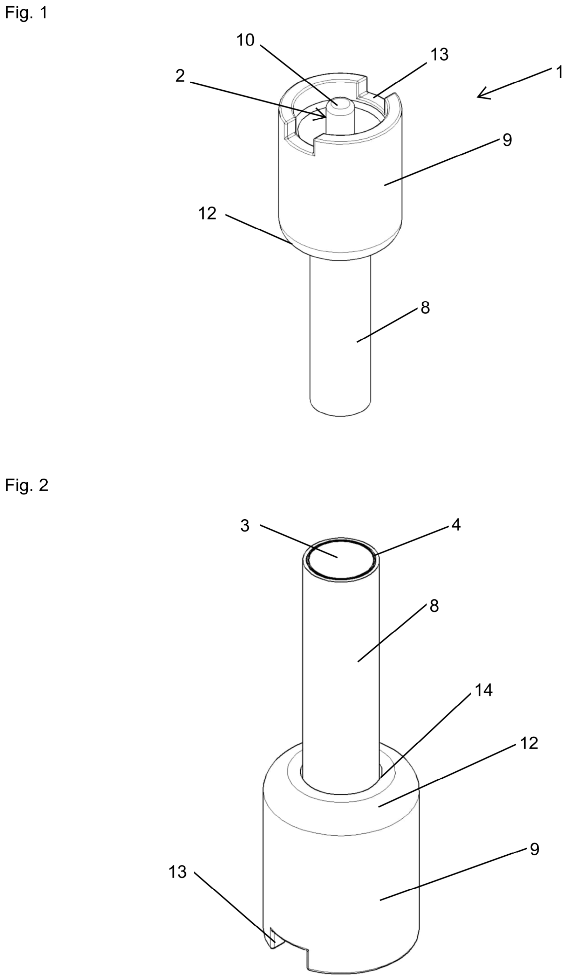

In der Figur 1 ist eine perspektivische Ansicht von schräg oben auf einen erfindungsgemässen Temperatur-Auslöser 1 gezeigt. Der zum Austausch geeignete und vorgesehene Temperatur-Auslöser 1 umfasst, wie in Figur 1 sichtbar, einen Kupplungskorb 9, in welchem ein Betätigungs-Stössel 2 angeordnet ist.

Von dem Kupplungskorb 9 reicht eine Aussenhülse 8 weg. Zu der Aussenhülse 8 hin formt der Kupplungskorb 9 einen Einstülpungsring 12 aus. Andernends des Einstülpungsrings 12 formt der Kupplungskorb 9 eine Befestigungseinrichtung 13 aus. Zusätzlich formt der Betätigungs-Stössel 2 eine erste Kupplung 10 aus.

In Figur 2 ist eine perspektivische Ansicht von schräg unten auf den Temperatur-Auslöser 1 gezeigt. In Figur 2 lässt sich gut erkennen, dass die Aussenhülse 8 in einen Durchlass 14 des Kupplungskorbs 9 hineinreicht bzw. durch ihn hindurch verläuft. Auch ist durch diese Ansicht gut zu erkennen, dass in der Aussenhülse 8 eine Innenhülse 3 angeordnet ist, wobei zwischen der Innenhülse 3 und der Aussenhülse 8 ein Schmelzlot 4 angeordnet ist.

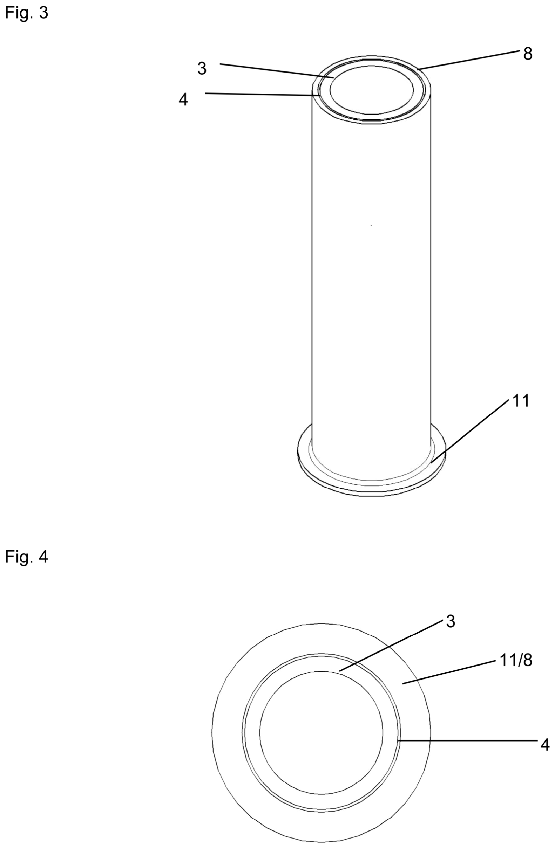

Die Figur 3 zeigt nun alleinstehend die Aussenhülse 8, die eine im Wesentlichen zylindrische Form hat, die einends einen Ausstülpungsring 11 aufweist. Andernends ist in der Aussenhülse 8 die Innenhülse 3 angeordnet, wobei zwischen der Innenhülse 3 und der Aussenhülse 8 das Schmelzlot 4 angeordnet ist. Der Ausstülpungsring 11 dient als Durchrutschsicherung für die Aussenhülse 8. Dadurch soll verhindert werden, dass die Aussenhülse 8 in Ruhelage aus dem Kupplungskorb 9 herausgleiten kann.

Die Figur 4 zeigt eine Draufsicht auf die Aussenhülse 8 nach Figur 3, wobei der Ausstülpungsring 11 der Aussenhülse 8 gezeigt ist. Auch ist hier gut zu erkennen, dass in der Aussenhülse 8 die Innenhülse 3 angeordnet ist, wobei zwischen der Aussenhülse 8 und der Innenhülse 3 das Schmelzlot 4 angeordnet ist. Die zur Figur 3 gemachten Ausführungen gelten in gleichem Masse für die Figur 4.

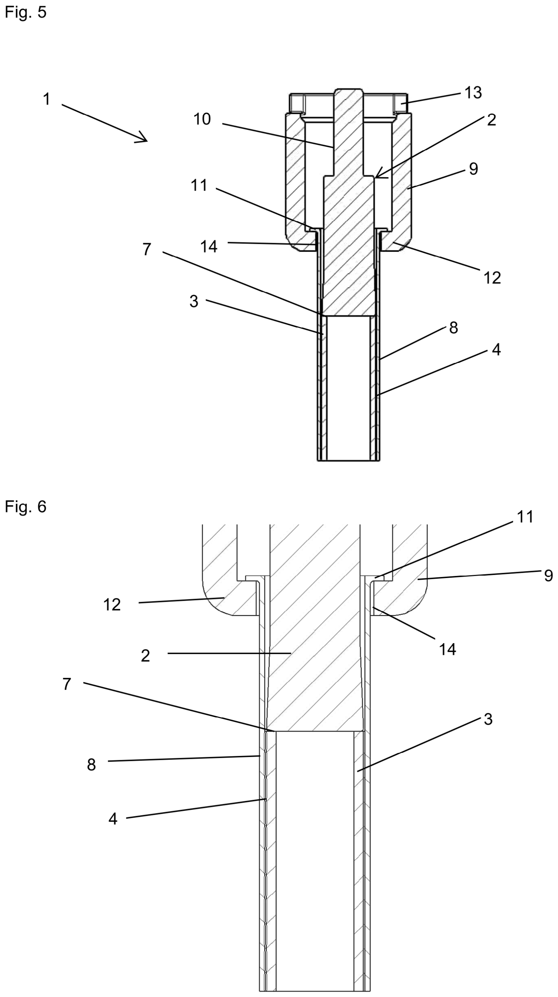

Figur 5 zeigt eine geschnittene Ansicht des erfindungsgemässen Temperatur-Auslösers 1. In einem Inneren der Aussenhülse 8 ist der Betätigungs-Stössel 2 angeordnet, wobei der Betätigungs-Stössel 2 in einer gezeigten Ruhelage in der Innenhülse 3 angeordnet ist. Die Innenhülse 3 ist im Wesentlichen ein Röhrenzylinder.

Der Betätigungs-Stössel 2 bildet einends, d.h. zu der Innenhülse 3 hin, einen Anschlag 7 aus. Andernends des Anschlag 7 weist der Betätigungs-Stössel 2 eine erste Kupplung 10 auf. Der Anschlag 7 und somit der Betätigungs-Stössels 2 wird beim Schmelzen des Schmelzlots 4 aktiviert, wodurch der Übergang von der Ruhelage zu einer Arbeitslage vollzogen wird.

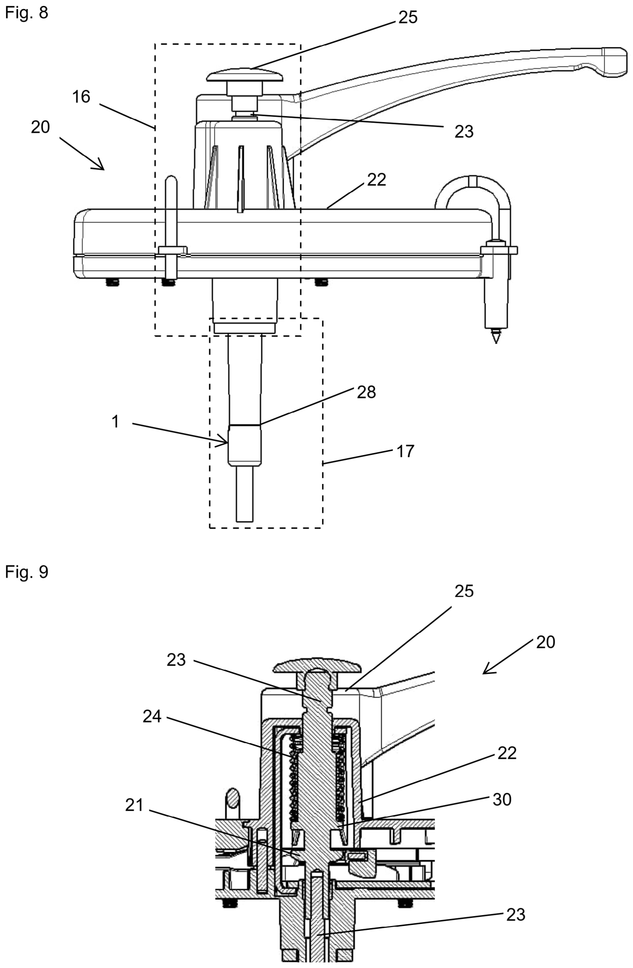

In der gezeigten Ruhelage liegt der Anschlag 7 bevorzugt an einem Abschlussrand der Innenhülse 3 an. Auf diese Weise ist in Arbeitslage eine direkte Aktivierung des Betätigungs-Stössels 2 möglich. Die Arbeitslage tritt dadurch ein, dass das Schmelzlot 4 durch Erhitzung verflüssigt wird. Dadurch gibt die Aussenhülse 8 die Innenhülse 3 frei und der Betätigungs-Stössel 2 drückt die Innenhülse 3 weg von dem Kupplungskorb 9. Dabei entspannt sich eine Feder 24 einer Luftkanal-Verschlusseinrichtung 20, welche in den Figuren 8 und 9 besser zu erkennen ist.

Die Aussenhülse 8 weist einends den Ausstülpungsring 11 auf, wobei der Ausstülpungsring 11 in Ruhelage auf dem Einstülpungsring 12 des Kupplungskorbs 9 aufliegt. Dadurch wird verhindert, dass die Aussenhülse 8 in Ruhelage aus dem Kupplungskorb 9 herausgleiten kann. Der Kupplungskorb 9 weist den Durchlass 14 auf. Die Aussenhülse 8 greift in Ruhelage durch den Durchlass 14 hindurch.

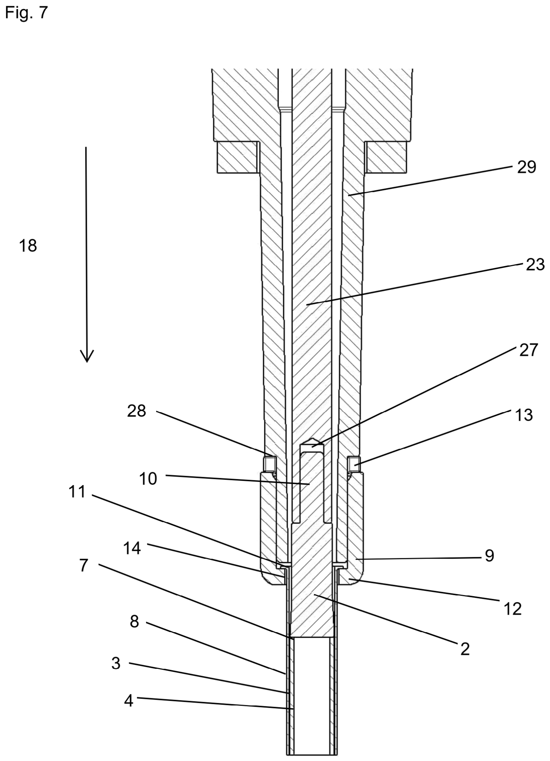

Der Kupplungskorb 9 weist ausserdem eine Befestigungseinrichtung 13 auf. Die erste Kupplung 10 des Betätigungs-Stössels 2 und die Befestigungseinrichtung 13 des Kupplungskorbs 9 spielen bei der Austauschbarkeit des Temperatur-Auslösers 1 eine wichtige Rolle. Der Kupplungskorb 9 ist ähnlich einer Überwurfmutter dazu geeignet, um den Betätigungs-Stössel 2 mit einer Kegelhülse 29 der Luftkanal-Verschlusseinrichtung 20 zu verbinden und dabei gleichzeitig die erste Kupplung 10 auswechselbar in einer Kupplungsaufnahme 27 eines Betätigers 23 anzuordnen (siehe beispielsweise Figur 7). Dabei ist die erste Kupplung 10 auf definierte einfache Weise per Werkzeug oder manuell von der Kupplungsaufnahme 27 trennbar und wieder verbindbar. Dadurch wird die Austauschbarkeit gewährleistet.

Figur 8 zeigt eine Seitenansicht einer Luftkanal-Verschlusseinrichtung 20. Dort ist ein Gehäuse 22 zu erkennen. Das Gehäuse 22 umfasst ein in einen ersten Abschnitt 16 und einen zweiten Abschnitt 17 unterteiltes Aktivierungselement. Das Aktivierungselement 16/17 zeigt einends einen Auslöseknopf 25, welcher in einen aus mehreren Teilen bestehenden Auslösebolzen 23 übergeht. Der Auslösebolzen 23 wiederum greift durch das Gehäuse 22 hindurch bis zu dem Temperatur-Auslöser 1. Dabei umfängt die sich von dem Gehäuse 22 zu dem Temperatur-Auslöser 1 hin sich verjüngende Kegelhülse 29 den Auslösebolzen 23.

Der erste Abschnitt 16 des Aktivierungselementes ist in Form einer Schnittzeichnung in Figur 9 gezeigt. Der zweite Abschnitt 17 des Aktivierungselementes ist als Schnittzeichnung in Figur 7 gezeigt.

Figur 7 zeigt dabei in vergrösserter Ansicht, wie der austauschbare Temperatur-Auslöser 1 in Ruhelage mit der Luftkanal-Verschlusseinrichtung 20 (siehe Figur 8) für eine Brandschutzklappe verbunden ist.

Die Befestigungseinrichtung 13 des Temperatur-Auslösers 1 ist dabei mit einer ersten Kopplungsaufnahme 28 verbunden und die erste Kupplung 10 des Betätigungs-Stössels 2 ist mir der Kupplungsaufnahme 27 des Betätigers 23 verbunden. Die Kegelhülse 29 ist im Inneren verjüngend von dem Gehäuse 22 zu dem Temperatur-Auslöser 1 hin ausgebildet. Bei der Aktivierung der Arbeitslage durch das Schmelzen den Schmelzlots 4 entspannt sich die Feder 24 in der Richtung eines Aktivierungspfeils 18. Bei der sich zu dem Temperatur-Auslöser 1 entspannenden Feder 24 ist die sich verjüngenden Hohlkegelform der Kegelhülse 29 vorteilhaft, um die entstehende Kraft zu kanalisieren.

Von dem Gehäuse 22 umfasst ist einends der Auslöseknopf 25 und andernends die zweite Kupplungsaufnahme 28. Die zweite Kopplungsaufnahme 28 ist wiederlösbar oder austauschbar mit dem Kupplungskorb 9 des Temperatur-Auslösers 1 verbindbar.

Die Figur 9 zeigt einen Auslösemechanismus 21, wobei der Auslösemechanismus 21 in dem Gehäuse 22 angeordnet ist. Dabei ist der Auslösemechanismus 21 mit dem Auslösebolzen 23 wirkverbunden. Beim Entspannen der Feder 24 betätigt der Auslösebolzen 23 gleichzeitig den Auslösemechanismus 21, welcher wiederum über eine nicht näher gezeigte Konstruktion beispielsweise eine Brandschutzklappe in einem Lüftungskanal aktiviert und dabei den Lüftungskanal verschliesst.

Dazu weist der Auslösebolzen23 eine Federhalterung 30 auf, die bei sich entspannender Feder 24 die Kraft auf den Auslösebolzen 23 überträgt und dabei den Auslösemechanismus 21 betätigt. In Ruhelage ist der Auslösebolzen 23 durch die Feder 24 vorgespannt. In Arbeitslage ist die Feder 24 entspannt und der Auslösebolzen 23 hat den Auslösemechanismus aktiviert.

Der Auslösebolzen 23 umfasst einends den Auslöseknopf 25 und andernends in einem Bereich der Kegelhülse 29 den Temperatur-Auslöser 1. Durch die erste Kupplung 10 des Temperatur-Auslöser 1 und der Verbindbarkeit der ersten Kupplung 10 mit der ersten Kupplungsaufnahme 27 des Betätigers 23 wird dem Nutzer auf einfache Weise ermöglicht, den beispielsweise veralteten oder aktivierten Temperatur-Auslöser 1 auszutauschen.

Die Funktionsweise der vorliegenden Erfindung ist folgende:
In Ruhelage ist der Temperatur-Auslöser 1 an der Luftkanal-Verschlusseinrichtung 20 angebracht. Dabei ragt ein Teil der Luftkanal-Verschlusseinrichtung 20 in den nicht näher gezeigten Lüftungskanal hinein, sodass zumindest der Temperatur-Auslöser 1 sich zumindest teilweise oder ganz in dem Lüftungskanal befindet.

Zusätzlich ist die Luftkanal-Verschlusseinrichtung 20 mit beispielsweise einer Brandschutzklappe in demselben Lüftungskanal wirkverbunden.

Entsteht beispielsweise in dem mit dem Lüftungskanal verbundenen Raum ein Feuer, gelangt die durch das Feuer entstehende Hitze beispielsweise in den Lüftungskanal. Dabei trifft die Hitze auf den Temperatur-Auslöser 1. Bei einer definierten Hitze fängt das feste Schmelzlot 4 an flüssig zu werden, sodass die Innenhülse 3 durch den Betätigungs-Stössel 2, welcher wiederum durch die sich entfaltende Feder 24 aktiviert wird, aus der Aussenhülse 8 in Richtung des Lüftungskanals oder weg von dem Kupplungskorb 9 gedrückt wird. Das wiederum führt dazu, dass der Auslösemechanismus 21 durch den Auslösebolzen 23 aktiviert wird, was wiederum zum Verschluss des Lüftungskanals durch die Brandschutzklappe führt.

### Bezugszeichenliste

| | |
|---|---|
| 1 | Temperatur-Auslöser |
| 2 | Betätigungs-Stössel |
| 3 | Innenhülse |
| 4 | Schmelzlot |
| 5 | |
| 6 | |
| 7 | Anschlag |
| 8 | Aussenhülse |
| 9 | Kupplungskorb |
| 10 | erste Kupplung |
| 11 | Ausstülpungsring |
| 12 | Einstülpungsring |
| 13 | Befestigungseinrichtung |
| 14 | Durchlass |
| 15 | |
| 16 | 1. Ausschnitt |
| 17 | 2. Ausschnitt |
| 18 | Aktivierungsrichtung |
| 19 | |
| 20 | Luftkanal-Verschlusseinrichtung |
| 21 | Auslösemechanismus |
| 22 | Gehäuse |
| 23 | Betätiger |
| 24 | Feder |
| 25 | Auslöseknopf |
| 26 | |
| 27 | erste Kupplungsaufnahme |
| 28 | zweite Kopplungsaufnahme |
| 29 | Kegelhülse |
| 30 | Federhalter |
| 31 | |
| 32 | |
| 33 | |

## Patentansprüche

1. Temperatur-Auslöser (1) für eine Luftkanal-Verschlusseinrichtung (20) mit einem Betätigungs-Stössel (2), wobei der Betätigungs-Stössel (2) in einer Ruhelage in einer Innenhülse (3) angeordnet ist, wobei der Betätigungs-Stössel (2) in Ruhelage feder-vorgespannt ist,
**dadurch gekennzeichnet, dass**
die Innenhülse (3) ein Röhrenzylinder ist, wobei der Betätigungs-Stössel (2) in Ruhelage einen Anschlag (7) ausbildet, wobei die Innenhülse (3) in einer Aussenhülse (8) angeordnet ist, wobei die Aussenhülse (8) einends in einen Kupplungskorb (9) mündet und andernends geöffnet ist, wobei der Betätigungs-Stössel (2) andernends des Konvex-Kegels (7) eine erste Kupplung (10) aufweist, wobei ein Schmelzlot (4) zwischen der Innenhülse (3) und der Aussenhülse (6) angeordnet ist.

2. Temperatur-Auslöser (1) nach Anspruch 1, **dadurch gekennzeichnet, dass** der Anschlag (7) auf einem Rand der Innenhülse (3) anliegt.

3. Temperatur-Auslöser (1) nach Anspruch 1 oder 2, **dadurch gekennzeichnet, dass** die Innenhülse (3) (6) andererseits des Betätigungs-Stössels (2) plan mit der geöffneten Aussenhülse (8) abschliesst.

4. Temperatur-Auslöser (1) nach einem der vorigen Ansprüche, **dadurch gekennzeichnet, dass** die Aussenhülse (8) einends einen Ausstülpungsring (11) aufweist, wobei der Ausstülpungsring (11) in Ruhelage auf einem Einstülpungsring (12) aufliegt.

5. Temperatur-Auslöser (1) nach einem der vorigen Ansprüche, **dadurch gekennzeichnet, dass** der Kupplungskorb (9) eine Befestigungseinrichtung (13) aufweist.

6. Luftkanal-Verschlusseinrichtung (20) für eine Brandschutzklappe mit einem Auslösemechanismus (21), wobei der Auslösemechanismus (21) in einem Gehäuse (22) angeordnet ist, wobei der Auslösemechanismus (21) einen Auslösebolzen (23) aufweist, wobei der Auslösebolzen (23) eine Feder (24) umfasst, die in Ruhelage den Auslösebolzen (23) vorspannt, wobei der Auslösebolzen (23) einends einen Auslöseknopf (25) aufweist und andernends in einem Bereich einer Führung (26) den Temperatur-Auslöser (1) nach den Ansprüchen 1 bis 5 aufweist, **dadurch gekennzeichnet, dass** die erste Kupplung (10) des Temperatur-Auslöser (1) austauschbar mit einer ersten Kupplungsaufnahme (27) des Betätigers (23) verbindbar ist.

7. Luftkanal-Verschlusseinrichtung (20) nach Anspruch 6, **dadurch gekennzeichnet, dass** die Führung (26) einends von dem Gehäuse (22) umfasst ist und andernends eine zweite Kupplungsaufnahme (28) aufweist, wobei die zweite Kopplungsaufnahme (28) austauschbar mit der Befestigungseinrichtung (13) des Kupplungskorb (9) des Temperatur-Auslösers (1) verbindbar ist.

8. Luftkanal-Verschlusseinrichtung (20) nach Anspruch 6 oder 7, **dadurch gekennzeichnet, dass** die Führung (26) eine sich weg von dem Gehäuse (22) verjüngende Kegelhülse (29) ausbildet, in welcher der Auslösebolzen (23) angeordnet ist.
